# EUROPEAN PATENT APPLICATION

(11) **EP 4 835 840 A1**
(43) Date of publication of application: **04.11.2026**
(21) Application number: 24924138.1
(22) Date of filing: 12.12.2024
(51) Int. Cl.: G06V 20/40, G06V 10/70, G06V 20/62, G06V 10/94, G06N 20/00, G06T 7/62, G10L 13/08, H04R 1/00, H04N 21/44

(54) **DISPLAY APPARATUS AND CONTROL METHOD THEREOF**

(30) Priority: 08.02.2024 KR 20240019981
(71) Applicant: Samsung Electronics Co., Ltd., Suwon-si, Gyeonggi-do 16677 (KR)
(72) Inventor: CHOI, Jinwuk, Suwon-si Gyeonggi-do 16677 (KR); KIM, Byounghyun, Suwon-si Gyeonggi-do 16677 (KR); LEE, Sangyoung, Suwon-si Gyeonggi-do 16677 (KR); LEE, Sujin, Suwon-si Gyeonggi-do 16677 (KR); CHOI, Younho, Suwon-si Gyeonggi-do 16677 (KR); HAHM, Cheulhee, Suwon-si Gyeonggi-do 16677 (KR)
(74) Representative: Appleyard Lees IP LLP
(86) International application number: PCT/KR2024/096767
(87) International publication number: WO 2025/170199

(57) **Abstract**

This display apparatus comprises: a display unit on which a video including a first video frame and a second video frame is displayed; and at least one processor for acquiring first video frame object information that includes at least one from among the number of objects included in the first video frame, the distance between the objects, and the types of the objects, acquiring second video frame object information including at least one from among the number of objects included in the second video frame, the distance between the objects, and the types of the objects, and recognizing, on the basis of the difference between the first video frame object information and the second video frame object information, whether the object displayed on the display unit has changed.

## Description

### Technical Field

The present disclosure relates to a display apparatus and a control method of the display apparatus.

### Background Art

In general, a display apparatus is a kind of an output apparatus for converting obtained or stored electrical information into visual information and displaying the visual information for users. The display apparatus is used in various fields, such as homes, businesses, etc.

Display apparatuses include a monitor connected to a personal computer, a server computer, etc., a portable terminal, such as a portable computer, a navigation terminal, a general television, an Internet Protocol television (IPTV), a smart phone, a tablet PC, Personal Digital Assistant (PDA), or a cellular phone, various display apparatuses used for reproducing images such as advertisements or movies in industrial sites, a transparent display, a projector, or other various kinds of audio/video systems.

The display apparatus includes a light source module for converting electrical information into visual information, and the light source module includes a plurality of light sources for emitting light independently. Each of the plurality of light sources includes, for example, a light-emitting diode (LED) or an organic light-emitting diode (OLED), a micro LED, a mini LED, and a QD LED.

Hearing-impaired people using display apparatuses may understand the content of the video through subtitles displayed on the display apparatuses. However, visually impaired people using display apparatuses have difficulties in visually perceiving the video displayed on the display apparatuses and accordingly, the people experience inconvenience in using the display apparatuses.

### Disclosure

### Technical Problem

The present disclosure provides a display apparatus capable of recognizing a change of an object in an image according to object information displayed in the image, and a control method of the display apparatus.

### Technical Solution

A display apparatus according to a concept of the present disclosure may include: a display configured to display an image including a first image frame and a second image frame; and at least one processor configured to obtain first image frame object information including at least one among the number of objects included in the first image frame, a distance between the objects, or kinds of the objects, obtain second image frame object information including at least one among the number of objects included in the second image frame, a distance between the objects, or kinds of the objects, and identify whether any object displayed on the display has changed, based on a difference between the first image frame object information and the second object frame object information.

A method of controlling a display apparatus, according to a concept of the present disclosure, the display apparatus including a display configured to display an image including a first image frame and a second image frame, may include: obtaining first image frame object information including at least one among the number of objects included in the first image frame, a distance between the objects, or kinds of the objects; obtaining second image frame object information including at least one among the number of objects included in the second image frame, a distance between the object, or kinds of the objects; and identifying whether any object displayed on the display has changed, based on a difference between the first image frame object information and the second image frame object information.

### Advantageous Effects

According to an aspect of the disclosure, by recognizing a change of an object displayed in an image of a display apparatus according to information about the object, a change of a situation in the image may be determined.

According to an aspect of the disclosure, by changing a voice based on recognition of a change of an object in an image of a display apparatus, a user of the display apparatus may easily recognize a change of a situation in the image.

Effects that can be achieved by the present disclosure are not limited to the above-mentioned those, and other effects not mentioned may be clearly understood by one of ordinary skill in the technical art to which the present disclosure belongs from the following description.

### Description of Drawings

FIG. 1 shows a display apparatus according to an embodiment.
FIG. 2 is an exploded view of a display apparatus according to an embodiment.
FIG. 3 is a control block diagram of a display apparatus according to an embodiment.
FIG. 4 is a diagram for describing a method of obtaining image frames from an image, according to an embodiment.
FIGS. 5 and 6 show image frames obtained from an image, according to an embodiment.
FIG. 7 is a flowchart illustrating a control method of a display apparatus according to an embodiment.
FIG. 8 shows a table listing weights assigned according to kinds of objects in an image frame, according to an embodiment.
FIG. 9 shows image frames obtained from an image, according to an embodiment.

### Modes of the Invention

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

The term "and/or" includes any and all combinations of one or more of associated listed items.

The terms "portion", "part, "module, or "member" may be implemented as software or hardware, and according to embodiments, a plurality of "portions", "parts, "modules, or "members" may be implemented as a single component, or a single "portion", "part, "module, or "member" may include a plurality of components.

Terms such as "1^{st}", "2^{nd}", or "first" or "second" may be used simply to distinguish a component from other components, without limiting the component in other aspects (e.g., importance or order).

A certain (e.g., a first) component is referred to as "coupled" or "connected" with or without the terms "functionally" or "communicatively" to another (e.g., second) component. When mentioned, it means that the certain component can be connected to the other component directly (e.g., by wire), wirelessly, or via a third component.

It is to be understood that the terms such as "including" or "having," etc., are intended to indicate the existence of the features, numbers, steps, operations, components, parts, or combinations thereof disclosed in this document, and are not intended to preclude the possibility that one or more other features, numbers, steps, operations, components, parts, or combinations thereof may exist or may be added.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a certain component is referred to as being "on" or "over" another component, it can be directly on the other component or intervening components may also be present.

In the following description, the terms "front", "rear", "left", "right", "upper", "lower", etc. are defined based on the drawings, and the shapes and positions of the respective components are not limited by the terms. For example, a front direction may be defined as a +X direction and a rear direction may be defined as a -X direction. For example, based on the drawings, a right direction may be defined as a +Y direction and a left direction may be defined as a -Y direction. For example, based on the drawings, an upward direction may be defined as a +Z direction and a downward direction may be defined as a -Z direction.

Hereinafter, an embodiment of the present disclosure will be described in detail with reference to the accompanying drawings.

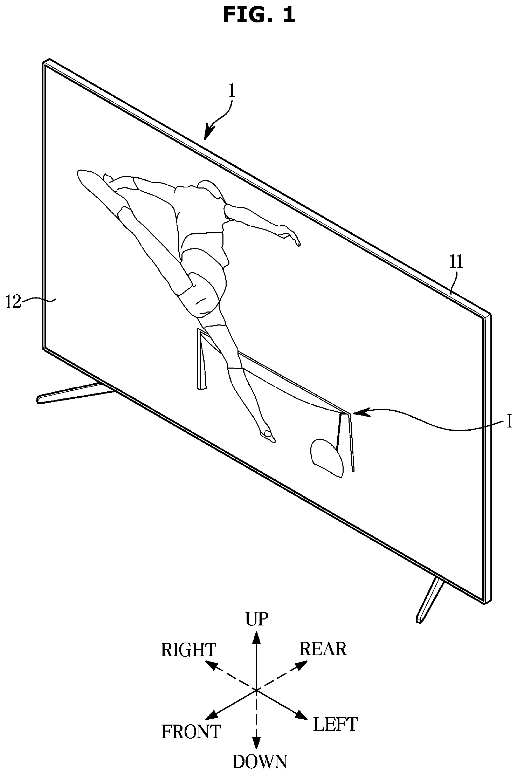

FIG. 1 shows a display apparatus according to an embodiment.

Referring to FIG. 1, a display apparatus 1 may include a main body 11 and/or a display area 12 that displays an image I.

The main body 11 may form an appearance of the display apparatus 1. Inside the main body 11, components for enabling the display apparatus 1 to display an image I or perform various functions may be installed. The main body 11 shown in FIG. 1 may be in a shape of a flat plate, however, the shape of the main body 11 is not limited to that shown in FIG. 1. For example, the main body 11 may be in a shape of a curved plate.

The display area 12 may be formed on a front surface of the main body 11 and display an image I. For example, the display area 12 may display a still image or a moving image. Also, the display area 12 may display a two-dimensional plane image or a three-dimensional stereoscopic image using a user's binocular disparity.

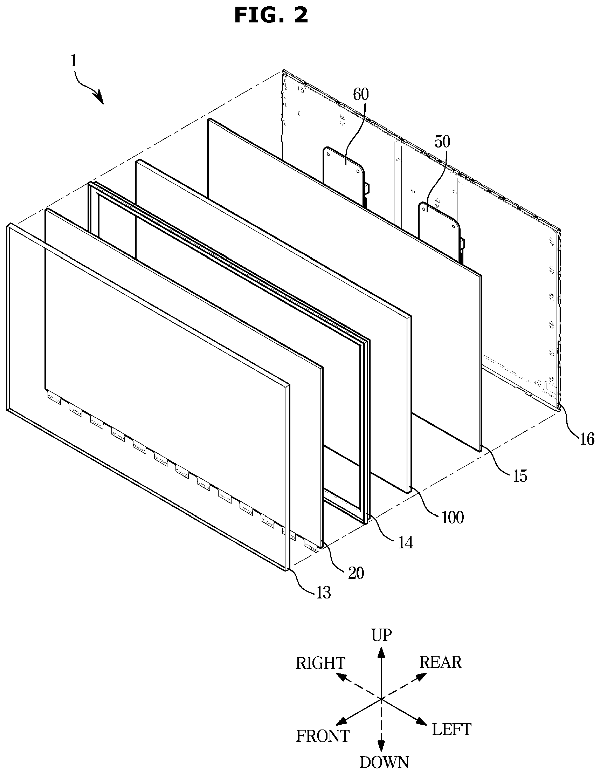

FIG. 2 is an exploded view of a display apparatus according to an embodiment.

As shown in FIG. 2, inside the main body 11, various components for generating an image I on the display area 12 may be provided.

For example, a light source device 100 being a surface light source, a liquid crystal panel 20 for transmitting or blocking light emitted from the light source device 100, a control assembly 50 for controlling operations of the light source 100 and/or the liquid crystal panel 20, or a power assembly 60 for supplying power to the light source device 100 and/or the liquid crystal panel 20 may be provided in the main body 11. Also, the main body 11 may include a bezel 13, a frame middle mold 14, a bottom chassis 15, and a rear cover 16 for supporting and fixing the liquid crystal panel 20, the light source device 100, the control assembly 50, and/or the power assembly 60.

The light source device 100 may include a point light source for emitting monochromic light or white light. Also, the light source device 100 may refract, reflect, and/or scatter light emitted from the point light source to convert the light into uniform surface light. As such, the light source device 100 may emit uniform surface light toward a front direction by refracting, reflecting, and/or scattering light emitted from the point light source.

The liquid crystal panel 20 may be positioned in front of the light source device 100, and block or transmit light emitted from the light source device 100 to form an image I.

A front surface of the liquid crystal panel 20 may form the above-described display area 12 of the display apparatus 1.

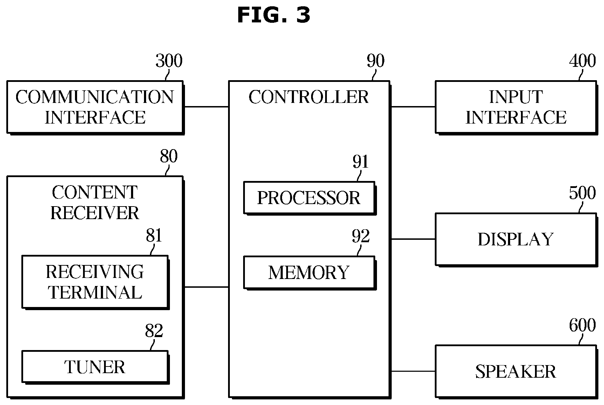

A display 500 (see FIG. 3) may include the display area 12 and/or various components for generating an image I on the display area 12.

An image I being displayed on the display area 12 may include an image I being displayed on the display 500. Hereinafter, an image I being displayed on the display area 12 will be described as an image I being displayed on the display 500.

FIG. 3 is a control block diagram of a display apparatus according to an embodiment.

Referring to FIG. 3, the display apparatus 1 may include a communication interface 300, a content receiver 80, a controller 90, an input interface 400, the display 500 and/or a speaker 600.

The communication interface 300 may include at least one of a short-range wireless communication module or a long-distance wireless communication module.

The communication interface 300 may transmit data to an external device or receive data from an external device. For example, the communication interface 300 may establish communication with a server, an external device (e.g., a keyboard, a mouse, a remote controller, a touch screen, a touch pad, a Virtual Reality (VR) Controller, and a user device) and/or another home appliance, and transmit and receive various data.

The user device may include, but is not limited to, a personal computer, a terminal, a mobile phone, a smart phone, a handheld device, a wearable device, a display device, etc.

To this end, the communication interface 300 may establish a direct (wired) communication channel or a wireless communication channel with the external device, and support communication through the established communication channel. According to an embodiment, the communication interface 300 may include a wireless communication module (e.g., a cellular communication module, a short-range wireless communication module, or a global navigation satellite system (GNSS) communication module), or a wired communication module (e.g., a local area network (LAN) communication module or a power line communication module). A corresponding communication module among the communication modules may communicate with the external device through a first network (e.g., a short-range communication network, such as Bluetooth, wireless fidelity (WiFi) direct, or infrared data association (IrDA)) or a second network (e.g., a long-distance communication network, such as a legacy cellular network, a 5G network, a next-generation communication network, internet, or a computer network (e.g., a local area network (LAN) or a wide area network (WAN)). Such various kinds of communication modules may be integrated into a component (for example, a single chip) or implemented as a plurality of independent components (for example, a plurality of chips).

The short-range wireless communication module may include, but is not limited to, a Bluetooth communication module, a Bluetooth Low Energy (BLE) communication module, a Near Field Communication (NFC) module, a Wireless Local Area Network (WLAN; WiFi) communication module, a Zigbee communication module, an Infrared Data Association (IrDA) communication module, a Wi-Fi Direct (WFD) communication module, a ultrawideband (UWB) communication module, an Ant+ communication module, a microwave (uWave) communication module, etc.

The long-distance wireless communication module may include a communication module that performs various kinds of long-distance communications, and may include a mobile communication device. The mobile communication device may transmit/receive a wireless signal to/from at least one of a base station, an external terminal, or a server on a mobile communication network.

In an embodiment, the communication interface 300 may communicate with an external device, such as a server, a user device, another home appliance, etc., through a surrounding Access Point (AP).

The communication interface 300 may transmit data received from a server, an external device, and/or another home appliance to the controller 90.

The content receiver 80 may include a receiving terminal 81 and a tuner 82 that receive content including a video signal and/or an audio signal from content sources.

The receiving terminal 81 may receive a video signal and an audio signal from the content sources through a cable. For example, the receiving terminal 81 may include a component (YPbPr/RGB) terminal, a composite video blanking and sync (CVBS) terminal, an audio terminal, a High Definition Multimedia Interface (HDMI) terminal, an Universal Serial Bus (USB) terminal, etc.

The tuner 82 may receive broadcasting signals from a broadcasting reception antenna or a wired cable. Also, the tuner 82 may extract a broadcasting signal of a channel selected by a user from among the broadcasting signals. For example, the tuner 82 may pass a broadcasting signal having a frequency corresponding to a channel selected by a user among a plurality of broadcasting signals received through the broadcasting reception antenna or the wired cable, and block broadcasting signals having the other frequencies.

As such, the content receiver 80 may receive a video signal and an audio signal from the content sources through the receiving terminal 81 and/or the tuner 82. The content receiver 80 may transfer the video signal and/or audio signal received through the receiving terminal 81 and/or the tuner 82 to the controller 90.

The controller 90 may generate image data from the video signal received from the content receiver 80. The controller 90 may control the display 500 to output an image I corresponding to the image data.

The controller 90 may generate voice data from an audio signal received from the content receiver 80. The controller 90 may control the speaker 600 to output voice information corresponding to the voice data.

The controller 90 may include hardware, such as at least one processor 91 and at least one memory.

The at least one memory 92 may store data in the form of algorithms and programs for controlling operations of components in the display apparatus 1. Also, the at least one memory 92 may store an application program. For example, the at least one memory 92 may store an application program for enabling the display 500 to output a preset image I or the speaker 600 to output a preset voice.

The at least one memory 92 may store an algorithm for obtaining an image frame from an image I.

The memory 92 and the processor 91 may be implemented as separate chips. The processor 91 may include one, two, or more processor chips or one, two, or more processing cores. The memory 92 may include one, two, or more memory chips or one, two, or more memory blocks. Also, the memory 92 and the processor 91 may be implemented as a single chip.

The at least one processor 91 may include an image processor, such as a Central Processing Unit (CPU) or a graphics card. The at least one processor 91 may perform the above-described operations and operations which will be described below, using data stored in the at least one memory 92.

For example, the at least one processor 91 may execute the application program stored in the memory 92 to enable the display 500 to output a preset image I or the speaker 600 to output a preset voice.

The at least one processor 91 may obtain preset information using a trained machine learning model. The trained machine learning model may include a model trained by using a plurality of image frames, a plurality of images, etc. as training data. The trained machine learning model may be implemented by using various machine learning networks, such as an artificial neural network (ANN) or a convolutional neural network (CNN).

The at least one processor 91 may be electrically connected to the communication interface 300, the input interface 400, the display 500, the speaker 600 and/or various components installed in the display apparatus 1 and may control the communication interface 300, the input interface 400, the display 500, the speaker 600 and/or the various components installed in the display apparatus 1.

The display 500 may display an image I including a plurality of image frames.

The display 500 may include at least one display. The at least one display may be a Light Emitting Diode (LED) panel, an Organic Light Emitting Diode (OLED) panel, and/or a Liquid Crystal Display panel and/or an indicator. Also, the display 500 may include a touch screen.

The input interface 400 may include a button (e.g., a push button and a touch button), a dial, a touch pad, a touch screen, and/or a microphone provided at various locations on the display apparatus 1.

The input interface 400 may receive a user input for controlling an image I that is output to the display 500.

The speaker 600 may output sound based on a sound output signal received from the controller 90.

The speaker 600 may be provided at various locations on the display apparatus 1. For example, the speaker 600 may be provided inside the display apparatus 1 or on the main body 11.

The speaker 600 may be connected to the display apparatus 1 by wire (e.g., USB connection or High Definition Multimedia Interface (HDMI)) or wirelessly (e.g., WIFI or Bluetooth connection).

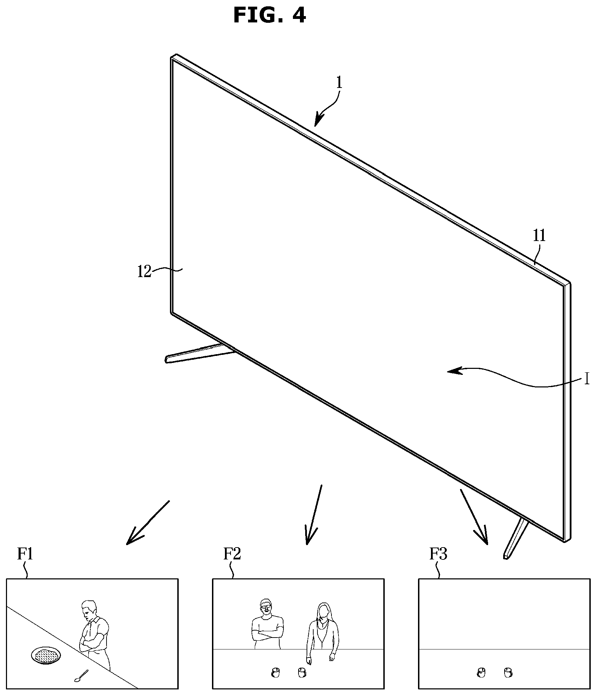

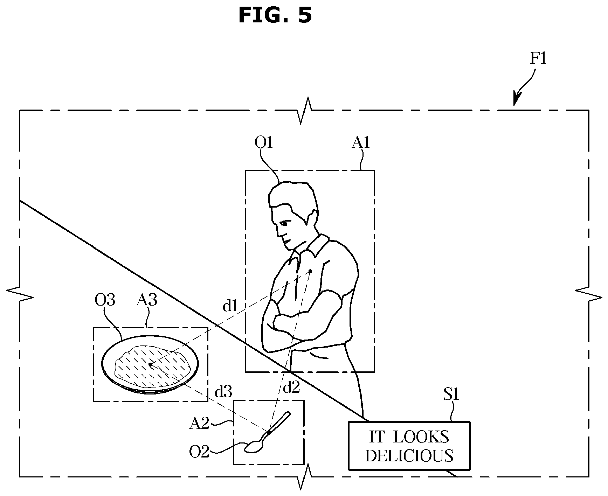

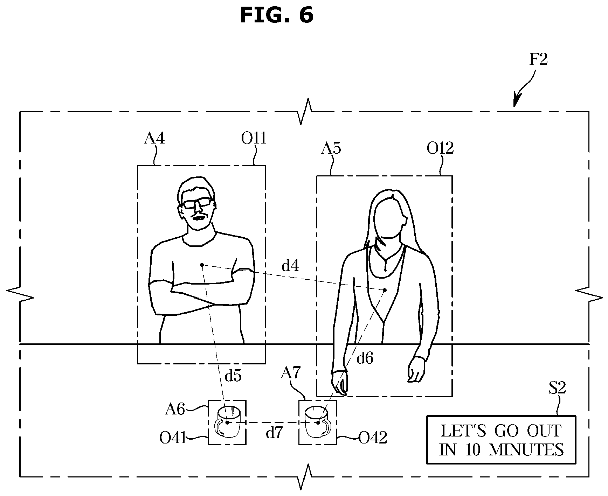

FIG. 4 is a diagram for describing a method of obtaining image frames from an image, according to an embodiment. FIGS. 5 and 6 show image frames obtained from an image, according to an embodiment.

Referring to FIG. 4, the at least one processor 91 may obtain a plurality of image frames from an image I. For example, the at least one processor 91 may obtain the plurality of image frames from the image I by using an algorithm stored in the memory 92.

An image I may include a plurality of image frames. For example, the image I may include a first image frame F1, a second image frame F2, and/or a third image frame F3. The number of image frames according to the present disclosure is not limited thereto, and the number of image frames may vary according to various embodiments.

An image I being displayed on the display 500 may include a plurality of image frames being sequentially displaying on the display 500.

For example, the image I being displayed on the display 500 may include the first image frame F1, the second image frame F2, and/or the third image frame F3 being sequentially displayed on the display 500.

Referring to FIGS. 5 and 6, in an embodiment, the at least one processor 91 may determine an area occupied by an object included in each image frame.

For example, the at least one processor 91 may input the first image frame F1 to a trained machine learning model to determine an area A1 occupied by a first object O2 included in the first image frame F1, an area A2 occupied by a second object O2 included in the first image frame F1, and an area A3 occupied by a third object O3 included in the first image frame F1.

As another example, the at least one processor 91 may determine an area A4 occupied by a fourth object O11 included in the second image frame F2, an area A5 occupied by a fifth object O12 included in the second image frame F2, an area A6 occupied by a sixth object O41 included in the second image frame F2, and/or an area A7 occupied by a seventh object O42 included in the second image frame F2.

In an embodiment, the at least one processor 91 may determine a kind of an object included in an image frame.

For example, the at least one processor 91 may input the first image frame F1 to the learned machine learning model to determine that the first object O1 is a human, the second object O2 is a spoon, and the third object O3 is a bowl.

As another example, the at least one processor 91 may input the second image frame F2 to the learned machine learning model to determine that the fourth object O11 is a man, the fifth object O12 is a woman, and the sixth object O41 and seventh object O42 are cups.

In an embodiment, the at least one processor 91 may determine a distance between the objects included in the image frame based on the areas occupied by the objects.

For example, the at least one processor 91 may determine a distance d2 between the first object O1 and the second object O2 as a distance from a center of the area A1 occupied by the first object O1 to a center of the area A2 occupied by the second object O2, a distance d1 between the first object O1 and the third object O3 as a distance from a center of the area A1 occupied by the first object O2 to a center of the area A3 occupied by the third object O3, and a distance d3 between the second object O2 and the third object O3 as a distance from a center of the area A2 occupied by the second object O2 to a center of the area A3 occupied by the third object O3.

As another example, the at least one processor 91 may determine a distance d4 between the fourth object O11 and the fifth object O12 as a distance from a center of the area A5 occupied by the fourth object O11 to a center of the area A6 occupied by the fifth object O12.

Inn an embodiment, the at least one processor 91 may obtain subtitle data from a subtitle included in the image I.

For example, the at least one processor 91 may obtain subtitle data from a first subtitle S1 included in the first image frame F1.

As another example, the at least one processor 91 may obtain subtitle data from a second subtitle S2 included in the second image frame F2.

In an embodiment, the at least one processor 91 may convert the subtitle data into text data and obtain text information based on the text data.

For example, the at least one processor 91 may obtain subtitle data from the first subtitle S1, convert the obtained subtitle data into text data based on the subtitle data, and obtain text information (e.g., It looks delicious) corresponding to the first subtitle S1 based on the text data.

As another example, the at least one processor 91 may obtain subtitle data from the second subtitle S2, convert the obtained subtitle data into text data based on the subtitle data, and obtain text information (e.g., Let's go out in 10 minutes) corresponding to the second subtitle S2 based on the text data.

The at least one processor 91 may obtain subtitle data by performing Optical Character Reader (OCR) on the subtitle included in the image frame.

When a subtitle included in an image frame is a closed cation, the at least one processor 91 may separate subtitle data from an image I and obtain the subtitle data.

In an embodiment, the at least one processor 91 may obtain voice information based on the obtained subtitle data and control the speaker 600 to output the voice information.

For example, the at least one processor 91 may obtain subtitle data from the first subtitle S1 included in the first image frame F1, obtain text information (e.g., It looks delicious) based on the obtained subtitle data, obtain voice information by using Text to Speech (TTS) from the obtained text information, and control the speaker 600 to output the obtained voice information.

As another example, the at least one processor 91 may obtain subtitle data from the second subtitle S2 included in the second image frame F2, obtain text information (e.g., Let's go out in 10 minutes) based on the obtained subtitle data, obtain voice information by using TTS from the obtained text information, and control the speaker 600 to output the obtained voice information.

In an embodiment, according to a user selecting a mode of reading a subtitle included in an image I, the at least one processor 91 may obtain voice information based on the subtitle data and control the speaker 600 to output the voice information.

For example, according to the at least one processor 91 receiving a command for selecting a mode of reading a subtitle received from an external device (e.g., a user device) through the communication interface 400, the at least one processor 91 may obtain voice information based on the subtitle data and control the speaker 600 to output the voice information.

The mode of reading the subtitle may include a mode of outputting voice information obtained based on subtitle data obtained from a subtitle included in an image I, not based on an audio signal received from the content receiver 80.

The mode of reading the subtitle may include a mode of outputting a voice of a language that is different from a language of a voice corresponding to an audio signal received from the content receiver 80.

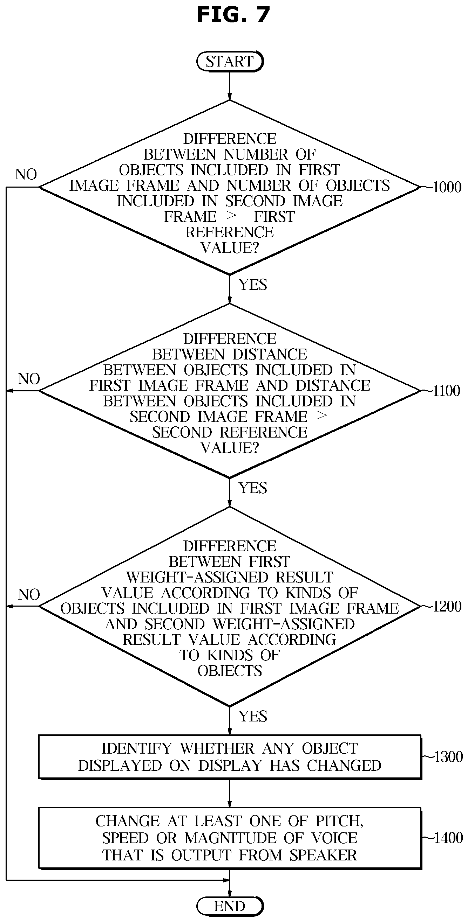

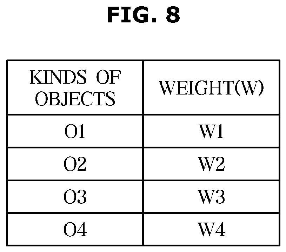

FIG. 7 is a flowchart illustrating a control method of a display apparatus according to an embodiment. FIG. 8 shows a table listing weights assigned according to kinds of objects in an image frame, according to an embodiment.

In an embodiment, the at least one processor 91 may obtain image frame object information including at least one among the number of objects included in an image frame, a distance between the objects, or kinds of the objects.

For example, referring to FIG. 5, the at least one processor 91 may obtain first image frame object information including at least one among the number (e.g., three) of objects included in the first image frame F1, distances (e.g., d1, d2, and d3) between the objects, or kinds (e.g., human, spoon, and bowl) of the objects.

As another example, referring to FIG. 6, the at least one processor 91 may obtain second image frame object information including at least one among the number (e.g., four) of objects included in the second image frame F2, distances (e.g., d4, d5, d6, and d7) between the objects, or kinds (e.g., man, woman, and cup) of the objects.

According to various embodiments, the at least one processor 91 may identify whether any object displayed on the display 500 has changed, based on a difference between the first image frame object information and the second image frame object information.

In an embodiment, based on a difference between the number of objects included in a first image frame and the number of objects included in a second image frame being greater than or equal to a first reference value, the at least one processor 91 may identify whether any object displayed on the display has changed (YES in 1000 and 1300). A case where any object displayed on the display has changed may include a case where a scene of an image I has changed, a case where a location of an object in the image I has changed, a case where an object displayed in the image I has disappeared, and a case where a new object has appeared in the image I.

For example, referring to FIGS. 5 and 6, based on a difference between the number of the objects O1, O2, and O3 included in the first image frame F1 and the number of the objects O11, O12, O41, and O42 included in the second image frame F2 being greater than or equal to the first reference value, the at least one processor 91 may identify whether any object displayed on the display 500 has changed.

In an embodiment, based on a difference between a distance between the objects included in the first image frame and a distance between the objects included in the second image frame being greater than or equal to a second reference value, the at least one processor 91 may identify whether any object displayed on the display 500 has changed (YES in 1100 and 1300). A distance between objects included in an image frame may include a total sum of distances between the objects included in the image frame.

For example, referring to FIGS. 5 and 6, based on a difference between a total sum d1+d2+d3 of distances between the objects O1, O2, and O3 included in the first image frame F1 and a total sum d4+d5+d6+d7 of distances between the objects O11, O12, O41, and O42 included in the second image frame F2 being greater than or equal to the second reference value, the at least one processor 91 may identify whether any object displayed on the display 500 has changed.

Referring to FIG. 8, the at least one memory 92 may store information about weights according to kinds of objects.

For example, the weights according to the kinds of objects may include a first weight W1 that is assigned to an object being a human, a second weight W2 that is assigned to an object being a spoon, a third weight W3 that is assigned to an object being a bowl, and a fourth weight W4 that is assigned to an object being a cup. However, the weights according to the present disclosure are not limited thereto, and kinds of objects and weights according to the kinds of objects may be provided according to various embodiments.

The first image frame object information may include a first weight-assigned result value obtained by assigning the weights according to the kinds of objects to the respective objects included in the first image frame. For example, referring to FIG. 5, the first image frame object information may include a first weight-assigned result value O1*W1+ O2*W2+ O3*W3 which is a sum of a value O1*W1 obtained by assigning the weight W1 to the first object O1, a value O2*W2 obtained by assigning the weight W2 to the second object O2, and a value O3*W3 obtained by assigning the weight W3 to the third object O3.

The second image frame object information may include a second weight-assigned result value obtained by assigning the weights according to the kinds of objects to the respective objects included in the second image frame. For example, referring to FIG. 6, the second image frame object information may include a second weight-assigned result value O11*W1+ O12*W1+ O41*W4+O42*W4 which is a sum of a value O11*W1 obtained by assigning the weight W1 to the fourth object O11, a value O12*W1 obtained by assigning the weight W1 to the fifth object O12, a value O41*W4 obtained by assigning the weight W4 to the sixth object O41, and a value O42*W4 obtained by assigning the weight W4 to the seventh object O42.

Again referring to FIG. 7, in an embodiment, based on a difference between the first weight-assigned result value according to the kinds of the objects included in the first image frame and the second weight-assigned result value according to the kinds of the objects included in the second image frame being greater than or equal to a third reference value, the at least one processor 91 may identify whether any object displayed on the display 500 has changed (YES in 1200 and 1300).

In an embodiment, based on the identification of whether any object displayed on the display 500 has changed, the at least one processor 91 may change at least one of a pitch, speed, or magnitude of a voice that is output from the speaker 600 (1300 and 1400).

For example, referring to FIGS. 5 and 6, according to identification of whether any object displayed on the display 500 has changed based on a difference between the first image frame object information included in the first image frame F1 and the second image frame object information included in the second image frame F2, the at least one processor 91 may control the speaker 600 to output a voice corresponding to the first subtitle S1 included in the first image frame F1 and then control the speaker 600 to output a voice which corresponds to the second subtitle S2 included in the second image frame F2 and of which at least one of a pitch, speed, or magnitude is different from that of the voice corresponding to the first subtitle S1.

According to the present disclosure, visually impaired people incapable of visually seeing an image displayed on the display 500 may recognize through a voice that an object of an image has changed.

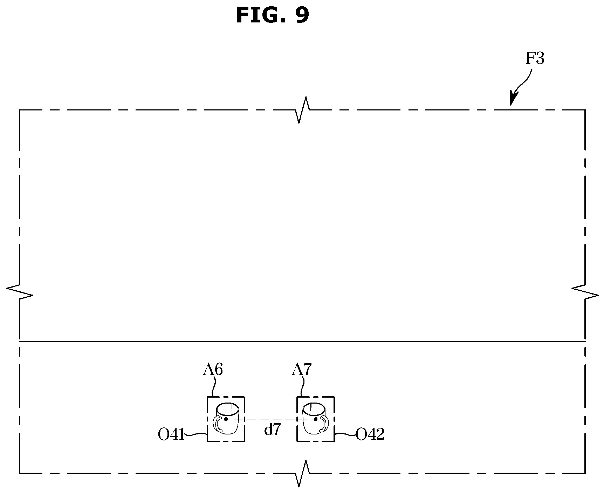

FIG. 9 shows image frames obtained from an image, according to an embodiment.

Referring to FIGS. 6 and 9, in an embodiment, even when no human is included among objects included in an image frame, the at least one processor 91 may identify whether any object displayed on the display 500 has changed.

For example, based on a difference between the number of the objects O11, O12, O41, and O42 included in the second image frame F2 and the number of the objects O41 and O42 included in the third image frame F3 being greater than or equal to the first reference value, the at least one processor 91 may identify that any object displayed on the display 500 has changed.

As another example, based on a difference between a total sum d4+d5+d6+d7 of distances between the objects O11, O12, O41, and O42 included in the second image frame F2 and a total sum d7 of a distance between the objects O41 and O42 included in the third image frame F3 being greater than or equal to the second reference value, the at least one processor 91 may identify that any object displayed on the display 500 has changed.

As another example, based on a difference between a second weight-assigned result value O11*W1+O12*W1+O41*W4+O42*W4 obtained by assigning weights according to kinds of objects to the respective objects O11, O12, O41, and O42 included in the second image frame F2 and a third weight-assigned result value O41*W4+O42*W4 obtained by assigning the weights according to the kinds of objects to the respective objects O41 and O42 included in the third image frame F3 being greater than or equal to the third reference value, the at least one processor 91 may identify that any object displayed on the display 500 has changed.

A display apparatus according to an embodiment of the present disclosure may include: a display configured to display an image including a first image frame and a second image frame; and at least one processor configured to obtain first image frame object information including at least one among the number of objects included in the first image frame, a distance between the objects, or kinds of the objects, obtain second image frame object information including at least one among the number of objects included in the second image frame, a distance between the objects, or kinds of the objects, and identify whether any object displayed on the display has changed, based on a difference between the first image frame object information and the second object frame object information.

The at least one processor may be configured to identify whether any object displayed on the display has changed, based on a difference between the number of the objects included in the first image frame and the number of the objects included in the second image frame being greater than or equal to a first reference value.

The distance between the objects included in the first image frame may include a total sum of distances between the objects included in the first image frame, the distance between the objects included in the second image frame may include a total sum of distances between the objects included in the second image frame, and the at least one processor may be configured to, based on a difference between the total sum of the distances between the objects included in the first image frame and the total sum of the distances between the objects included in the second image frame being greater than or equal to a second reference value, identify whether any change displayed on the display has changed.

The display apparatus may further include memory storing information about weights according to kinds of objects, the first image frame object information may include a first weight-assigned result value obtained by assigning the weights according to the kinds of the objects to the respective objects included in the first image frame, and the second image frame object information may include a second weight-assigned result value obtained by assigning the weights according to the kinds of the objects to the respective objects included in the second image frame.

The at least one processor may be configured to, based on a difference between the first weight-assigned result value and the second weight-assigned result value being greater than or equal to a third reference value, identify whether any object displayed on the display has changed.

The at least one processor may be configured to determine areas occupied by the objects included in the first image frame and kinds of the objects included in the first image frame by inputting the first image frame to a trained machine learning model, and determine areas occupied by the objects included in the second image frame and kinds of the objects included in the second image frame by inputting the second image frame to the trained machine learning model.

The at least one processor may be configured to determine the distance between the objects included in the first image frame based on the areas occupied by the objects included in the first image frame, and determine the distance between the objects included in the second image frame based on the areas occupied by the objects included in the second image frame.

The display apparatus may further include a speaker, and the at least one processor may be configured to obtain subtitle data from a subtitle included in the image, obtain voice information based on the subtitle data, and control the speaker to output the voice information.

The at least one processor may be configured to, based on identifying that any object displayed on the display has changed, change at least one among a pitch, speed, or magnitude of the voice.

The at least one processor may be configured to, according to a user selecting a mode of reading the subtitle included in the image, obtain the voice information based on the subtitle data and control the speaker to output the voice information.

A method of controlling a display apparatus, according to an embodiment of the present disclosure, the display apparatus including a display configured to display an image including a first image frame and a second image frame, may include: obtaining first image frame object information including at least one among the number of objects included in the first image frame, a distance between the objects, or kinds of the objects; obtaining second image frame object information including at least one among the number of objects included in the second image frame, a distance between the object, or kinds of the objects; and identifying whether any object displayed on the display has changed, based on a difference between the first image frame object information and the second image frame object information.

The identifying of whether any object displayed on the display has changed may include identifying whether any object displayed on the display has changed, based on a difference between the number of the objects included in the first image frame and the number of the objects included in the second image frame being greater than or equal to a first reference value.

The distance between the objects included in the first image frame includes a total sum of distances between the objects included in the first image frame and the distance between the objects included in the second image frame may include a total sum of distances between the objects included in the second image frame, and the identifying of whether any object displayed on the display has changed may include identifying whether any object displayed on the display has changed, based on a difference between the total sum of the distances between the objects included in the first image frame and the total sum of the distances between the objects included in the second image frame being greater than or equal to a second reference value.

The method may further include: storing information about weights according to kinds of objects, the first image frame object information may include a first weight-assigned result value obtained by assigning the weights according to the kinds of the objects to the respective objects included in the first image frame, and the second image frame object information may include a second weight-assigned result value obtained by assigning the weights according to the kinds of the objects to the respective objects included in the second image frame.

The identifying of whether any object displayed on the display has changed may include identifying whether any object displayed on the display has changed, based on a difference between the first weight-assigned result value and the second weight-assigned result value being greater than or equal to a third reference value.

The method may further include determining areas occupied by the objects included in the first image frame and kinds of the objects included in the first image frame by inputting the first image frame to a trained machine learning model, and determining areas occupied by the objects included in the second image frame and kinds of the objects included in the second image frame by inputting the second image frame to the trained machine learning model.

The method may further include determining the distance between the objects included in the first image frame based on the areas occupied by the objects included in the first image frame, and determining the distance between the objects included in the second image frame based on the areas occupied by the objects included in the second image frame.

The method may further include obtaining subtitle data from a subtitle included in the image, obtaining voice information based on the subtitle data, and outputting the voice information.

The outputting of the voice information may include, based on identifying that any object displayed on the display has changed, changing at least one among a pitch, speed, or magnitude of the voice.

The outputting of the voice information may include, according to a user selecting a mode of reading the subtitle included in the image, obtaining the voice information based on the subtitle data and outputting the voice information.

A non-transitory storage medium may store computer-readable instructions to cause, when executed by a processor, the processor to control a display to display an image including a first image frame and a second image frame, obtain first image frame object information including at least one among the number of objects included in the first image frame, a distance between the objects, or kinds of the objects, obtain second image frame object information including at least one among the number of objects included in the second image frame, a distance between the objects, or kinds of the objects, and identify whether any object displayed on the display has changed based on a difference between the first image frame object information and the second image frame object information.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

Also, the computer-readable recording medium may be provided in the form of a non-transitory storage medium, wherein the term 'non-transitory storage medium' simply means that the storage medium is a tangible device, and does not include a signal (for example, an electromagnetic wave), but this term does not differentiate between where data is semi-permanently stored in the storage medium and where the data is temporarily stored in the storage medium. For example, a 'non-transitory storage medium' may include a buffer in which data is temporarily stored.

According to an embodiment, the method according to various embodiments disclosed in the present disclosure may be included and provided in a computer program product. The computer program product may be traded as a product between a seller and a buyer. The computer program product may be distributed in the form of a machine-readable recording medium (e.g., compact disc read only memory (CD-ROM)), or be distributed (e.g., downloadable or uploadable) online via an application store (e.g., Play Store^{™}) or between two user devices (e.g., smart phones) directly. When distributed online, at least part of the computer program product (e.g., a downloadable app) may be temporarily generated or at least temporarily stored in the machine-readable recording medium, such as a memory of the manufacturer's server, a server of the application store, or a relay server.

So far, the disclosed embodiments have been described with reference to the accompanying drawings. It will be understood by one of ordinary skill in the technical art to which the present disclosure belongs that the disclosure can be embodied in different forms from the disclosed embodiments without changing the technical spirit and essential features of the present disclosure. Thus, it should be understood that the disclosed embodiments are merely for illustrative purposes and not for limitation purposes.

## Claims

1. A display apparatus comprising:
a display configured to display an image including a first image frame and a second image frame; and
at least one processor configured to obtain first image frame object information including at least one among the number of objects included in the first image frame, a distance between the objects, or kinds of the objects,
obtain second image frame object information including at least one among the number of objects included in the second image frame, a distance between the objects, or kinds of the objects, and
identify whether any object displayed on the display has changed, based on a difference between the first image frame object information and the second object frame object information.

2. The display apparatus of claim 1, wherein
the at least one processor is configured to identify whether any object displayed on the display has changed, based on a difference between the number of the objects included in the first image frame and the number of the objects included in the second image frame being greater than or equal to a first reference value.

3. The display apparatus of claim 1, wherein
the distance between the objects included in the first image frame includes a total sum of distances between the objects included in the first image frame, and the distance between the objects included in the second image frame includes a total sum of distances between the objects included in the second image frame, and
the at least one processor is configured to, based on a difference between the total sum of the distances between the objects included in the first image frame and the total sum of the distances between the objects included in the second image frame being greater than or equal to a second reference value, identify whether any change displayed on the display has changed.

4. The display apparatus of claim 1, further comprising
memory storing information about weights according to kinds of objects,
wherein the first image frame object information includes a first weight-assigned result value obtained by assigning the weights according to the kinds of the objects to the respective objects included in the first image frame, and
the second image frame object information includes a second weight-assigned result value obtained by assigning the weights according to the kinds of the objects to the respective objects included in the second image frame.

5. The display apparatus of claim 4, wherein
the at least one processor is configured to, based on a difference between the first weight-assigned result value and the second weight-assigned result value being greater than or equal to a third reference value, identify whether any object displayed on the display has changed.

6. The display apparatus of claim 1, wherein
the at least one processor is configured to
determine areas occupied by the objects included in the first image frame and kinds of the objects included in the first image frame by inputting the first image frame to a trained machine learning model, and determine areas occupied by the objects included in the second image frame and kinds of the objects included in the second image frame by inputting the second image frame to the trained machine learning model.

7. The display apparatus of claim 6, wherein
the at least one processor is configured to determine the distance between the objects included in the first image frame based on the areas occupied by the objects included in the first image frame, and determine the distance between the objects included in the second image frame based on the areas occupied by the objects included in the second image frame.

8. The display apparatus of claim 1, further comprising
a speaker,
wherein the at least one processor is configured to obtain subtitle data from a subtitle included in the image, obtain voice information based on the subtitle data, and control the speaker to output the voice information.

9. The display apparatus of claim 8, wherein
the at least one processor is configured to, based on identifying that any object displayed on the display has changed, change at least one among a pitch, speed, or magnitude of the voice.

10. The display apparatus of claim 8, wherein
the at least one processor is configured to, according to a user selecting a mode of reading the subtitle included in the image, obtain the voice information based on the subtitle data and control the speaker to output the voice information.

11. A method of controlling a display apparatus including a display configured to display an image including a first image frame and a second image frame, the method comprising:
obtaining first image frame object information including at least one among the number of objects included in the first image frame, a distance between the objects, or kinds of the objects;
obtaining second image frame object information including at least one among the number of objects included in the second image frame, a distance between the object, or kinds of the objects; and
identifying whether any object displayed on the display has changed, based on a difference between the first image frame object information and the second image frame object information.

12. The method of claim 11, wherein
the identifying of whether any object displayed on the display has changed comprises identifying whether any object displayed on the display has changed, based on a difference between the number of the objects included in the first image frame and the number of the objects included in the second image frame being greater than or equal to a first reference value.

13. The method of claim 11, wherein the distance between the objects included in the first image frame includes a total sum of distances between the objects included in the first image frame and the distance between the objects included in the second image frame includes a total sum of distances between the objects included in the second image frame, and
the identifying of whether any object displayed on the display has changed comprises identifying whether any object displayed on the display has changed, based on a difference between the total sum of the distances between the objects included in the first image frame and the total sum of the distances between the objects included in the second image frame being greater than or equal to a second reference value.

14. The method of claim 11, further comprising:
storing information about weights according to kinds of objects,
wherein the first image frame object information includes a first weight-assigned result value obtained by assigning the weights according to the kinds of the objects to the respective objects included in the first image frame, and
the second image frame object information includes a second weight-assigned result value obtained by assigning the weights according to the kinds of the objects to the respective objects included in the second image frame.

15. The method of claim 14, wherein
the identifying of whether any object displayed on the display has changed comprises identifying whether any object displayed on the display has changed, based on a difference between the first weight-assigned result value and the second weight-assigned result value being greater than or equal to a third reference value.
